(19) Europäisches Patentamt
European Patent Office
Office européen des brevets

(11) **EP 3 402 178 B1**

(12) **FASCICULE DE BREVET EUROPEEN**

(45) Date de publication et mention de la délivrance du brevet:
**20.11.2019 Bulletin 2019/47**

(51) Int Cl.:
*H04N 5/232* *(2006.01)*  *H04N 5/374* *(2011.01)*
*G06T 5/00* *(2006.01)*  *G06T 5/50* *(2006.01)*

(21) Numéro de dépôt: **18169723.6**

(22) Date de dépôt: **27.04.2018**

(54) **CAPTEUR DE MOUVEMENT ET CAPTEUR D'IMAGES**

BEWEGUNGSSENSOR UND BILDSENSOR

MOTION SENSOR AND IMAGE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.05.2017 FR 1700508**

(43) Date de publication de la demande:
**14.11.2018 Bulletin 2018/46**

(73) Titulaire: **THALES**
**92400 Courbevoie (FR)**

(72) Inventeurs:
• **CHAMBON, Thomas**
**06400 CANNES (FR)**
• **HENROT, Simon**
**06156 CANNES LA BOCCA Cedex (FR)**
• **DEMIGUEL, Stéphane**
**06160 ANTIBES - JUAN LES PINS (FR)**

(74) Mandataire: **Derval, Estelle et al**
**Marks & Clerk France**
**Conseils en Propriete Industrielle**
**Immeuble Visium**
**22, avenue Aristide Briand**
**94117 Arcueil Cedex (FR)**

(56) Documents cités:
**WO-A1-2011/012663**

• **PERRIER R ET AL: "Satellite Image Registration for attitude estimation with a constrained polynomial model", ICIP 2010 - INTERNATIONAL CONFERENCE ON IMAGE PROCESSING, SEPTEMBER 26 - 29, 2010, HONG KONG, IEEE, PISCATAWAY, NJ , 26 septembre 2010 (2010-09-26), pages 1-4, XP002608264, ISBN: 978-1-4244-7993-1 Extrait de l'Internet: URL:http://hal.inria.fr/docs/00/51/48/96/P DF/3116.pdf [extrait le 2010-11-04]**
• **HOCHMAN G ET AL: "Restoration of images captured by a staggered time delay and integration camera in the presence of mechanical vibrations", APPLIED OPTICS, OPTICAL SOCIETY OF AMERICA, WASHINGTON, DC; US, vol. 43, no. 22, 2 août 2004 (2004-08-02), pages 4345-4354, XP002666923, ISSN: 0003-6935, DOI: 10.1364/AO.43.004345**
• **TCHERNYKH V ET AL: "Airborne test results for smart pushbroom imaging system with optoelectronic image correction", VISUAL COMMUNICATIONS AND IMAGE PROCESSING; 20-1-2004 - 20-1-2004; SAN JOSE,, vol. 5234, no. 1, 2 janvier 2004 (2004-01-02), pages 550-559, XP002520674, DOI: 10.1117/12.510712 ISBN: 978-1-62841-730-2**

**Description**

Le domaine de l'invention est celui de l'imagerie par balayage ou pousse-balais (en référence à l'expression anglo-saxonne « push-broom ») exploitant le défilement de scènes sur une matrice de pixels photosensibles montée sur un porteur tel qu'un satellite d'observation de la Terre ou une plateforme aéroportée.

L'invention s'applique notamment aux capteurs d'images du type dit « par décalage temporel et intégration « (TDI, de l'anglais « Time Delay and Intégration »).

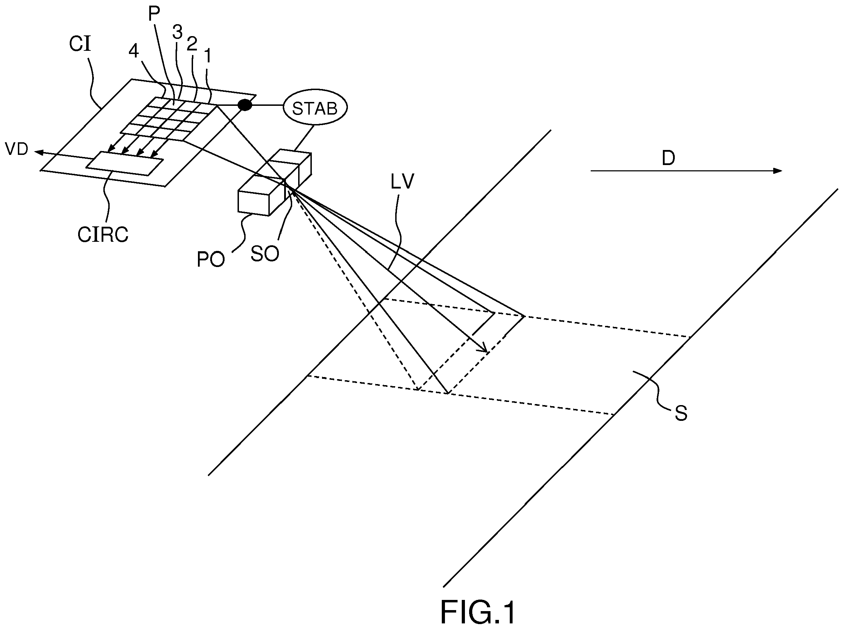

Le principe d'un capteur TDI CI illustré sur la figure 1. L'instrument optique représenté sur la figure 1 comprend un capteur CI comprenant une matrice photosensible de pixels photosensibles P, agencés par lignes (ou rangées) et par colonnes ; sur la figure, les lignes sont numérotées de 1 à N (avec N = 4 sur la figure 1). Lorsque le porteur PO dans lequel il est embarqué se déplace avec une vitesse constante V dans la direction D, perpendiculaire aux lignes ; l'image de la scène S observée, formée sur la matrice disposée dans le plan focal d'un système optique SO, défile dans la même direction, avec l'orientation opposée à V. Ainsi, la ligne de pixels de rang i+1 voit, à un instant $t_{i+1}$, la même distribution d'intensité lumineuse vue par la ligne d'ordre i à un instant précédent $t_i=t_{i+1}-\delta t$, correspondant à une même ligne d'une image optique de la scène observée.

Le capteur TDI CI comprend un circuit électronique CIRC de post-traitement qui intègre les signaux générés par les différentes lignes de pixels de la matrice et correspondant à une même ligne de l'image. En d'autres termes il additionne, colonne par colonne, les signaux générés par les pixels de la ligne de rang 1 à l'instant $t_1$, ceux de la ligne de rang 2 à l'instant $t_2$, ... et ceux de la ligne de rang N à l'instant $t_N$. A sa sortie, le circuit C fournit un vecteur de données d'image VD représentatif de ladite ligne de l'image optique, intégrée sur un temps égal à $N \cdot \delta t$, ce qui permet d'augmenter le rapport signal sur bruit des données d'image acquises par le capteur.

Toutefois, la matrice de détection subit des perturbations qui font varier sa vitesse selon l'axe des lignes et selon l'axe des colonnes perturbant ainsi la ligne de visée LV. En d'autres termes, les lignes de visée des pixels varient. La ligne de visée d'un pixel photosensible à un instant donné est définie comme la direction reliant le point de la scène observée par le pixel, le centre optique du système optique et le pixel photosensible. Les lignes de visée des pixels photosensibles aux instants où ils génèrent des signaux dont sont issues les données d'image qui sont accumulées pour générer une donnée d'image accumulée varient. La ligne de visée LV représentée sur la figure 1 est une ligne de visée moyenne, c'est-à-dire la ligne de visée du pixel photosensible central. Ces perturbations peuvent être par exemples dues à des instabilités de l'attitude du porteur PO ou à des micro-vibrations de la matrice par rapport au porteur PO. Ces perturbations induisent des défauts dans les images délivrées par le capteur se traduisant sous la forme de flous.

La connaissance précise des perturbations de la ligne de visée (par exemple de la ligne de visée moyenne) ou des variations de la vitesse de la matrice de détection selon l'axe des lignes et selon l'axe des colonnes pendant les phases d'acquisition de l'image est un paramètre clé de la performance du capteur. La connaissance de ces perturbations peut être utilisée pendant les phases d'acquisition image pour améliorer la qualité des images délivrées, par exemple en recalant les vecteurs de données d'images. Un dispositif de stabilisation STAB peut également utiliser la connaissance des perturbations pour les limiter et ainsi limiter leur impact sur les images acquises par le capteur.

Une solution actuelle pour mesurer les variations de la ligne de visée, notamment dans le domaine spatial, repose sur l'utilisation de gyroscopes. Or, ce système est très cher, lourd et contraignant pour l'aménagement des satellites. Par ailleurs, les gyroscopes présentent une bande passante limitée à quelques Hz, qui ne permet pas d'estimer les perturbations de ligne de visée à haute fréquence. Or, les micro-vibrations qui sont des contributeurs de haute fréquence à la perturbation de la ligne de visée empêchent d'atteindre des hautes résolutions (par accroissement du nombre d'étages TDI, c'est-à-dire du nombre de lignes sur lequel se fait l'intégration) et empêchent l'amélioration de la résolution au sol ou GSD (en référence à l'expression anglo-saxonne « Ground Sample Distance »).

Une autre solution est d'utiliser un capteur d'images dédié à la détection des mouvements. Un exemple de ce type de solution est décrit dans le document FR 2 967 754. Cette approche ne peut pas - ou difficilement - être mise en œuvre en utilisant des composants standards, disponibles dans le commerce (« COTS », de l'anglais « commercial off-the-shelf », c'est-à-dire « pris sur étagère »). En effet, d'une part les capteurs élémentaires de bougé ne sont pas des composants standards (le capteur optique doit présenter une surface suffisamment grande pour permettre d'observer des détails et doit permettre de faire des acquisitions rapides d'images, typiquement à une fréquence supérieure à 10 Hz), d'autre part l'exigence d'un alignement sensiblement parfait entre ces capteurs et les matrices de détections d'image, et entre ces dernières, rend pratiquement nécessaire une co-intégration monolithique.

L'article « Satellite image registration for attitude estimation with a constrained polyniomial model » par R. Perrier et.al. paru dans Proceedings of International Conférence on Image Processing en Septembre 2010, divulgue une méthode de modélisation par polynômes contraints pour l'estimation du mouvement linéaire d'une caméras pousse-balais (pushbroom).

L'invention vise à surmonter au moins un des inconvénients précités.

A cet effet, l'invention a pour objet un capteur de mouvement, destiné à être embarqué dans un porteur se déplaçant au-dessus d'une scène et destiné à être soumis à des vibrations lors de son déplacement, selon la revendication 1.

Avantageusement, l'invention comprend au moins une des caractéristiques ci-dessous prises seules ou en combinaison :

- le circuit de filtrage est configuré pour filtrer plusieurs séquences de N données d'image de sorte à générer plusieurs pseudo-données d'image, le module d'estimation d'un mouvement est configuré pour estimer ladite au moins une grandeur représentative du décalage à partir d'un unique ensemble de pseudo-données d'image prise parmi lesdites pseudo-données d'image, les pseudo-données d'image dudit ensemble étant déterminée à partir de séquence de données d'image correspondant à différentes régions de la scène observées aux mêmes N instants différents,
- au moins un filtre est défini de façon à former un filtre spectral passe-bas ou passe-bande permettant de filtrer une bande de fréquences prédéterminée du décalage,
- la somme des coefficients $\alpha c,k$ avec k= 1 à N des filtres est nulle,
- le circuit de filtrage est configuré pour filtrer une pluralité de séquences de N données d'image générées par des pixels de ladite au moins une matrice de détection et correspondant à différentes régions de la scène observées aux N instants différents, les différentes séquences étant filtrées par des filtres à réponse impulsionnelle finie à N coefficients identiques,
- le circuit de filtrage est configuré pour filtrer une pluralité de séquences de N données d'image générées par des pixels de ladite au moins une matrice de détection par des filtres à réponse impulsionnelle finie à N coefficients distincts, le module d'estimation du mouvement (MOUV) étant configuré pour estimer des grandeurs représentatives du mouvement à partir de données de pseudo-image respectives issues de filtres distincts,
- les filtres distincts agissent sur des séquences de données d'image distinctes correspondant à différentes régions de la scène observées aux N instants différents,
- le capteur comprend un circuit de recalage qui utilise un premier décalage et est configuré pour recaler au moins une données d'image de sorte à corriger le premier décalage de façon que la pseudo-données image soit généré à partir d'une séquence de N données d'image correspondant sensiblement à une même région de la scène observée aux N instants d'observation lors du déplacement du porteur,
- le capteur comprend un circuit de calcul de gradient configuré pour calculer le gradient à partir de signaux générés par des pixels de la première matrice de détection,
- le circuit de calcul de gradient étant configuré pour déterminer le gradient à partir de séquences de données d'image générées par des pixels de la matrice de détection, les données d'image d'une même séquence de données d'image correspondant sensiblement à une même région de la scène observée à des instants différents, le circuit de calcul du gradient étant configuré pour filtrer les séquences de données d'image par des filtres à réponse impulsionnelle finie préalablement à la détermination du gradient de sorte à appliquer des poids respectifs aux données d'image des séquences de données d'image, les poids appliqués aux données d'image d'une même séquence décroissant avec l'ancienneté des données d'image de la séquence,
- la première matrice de détection est réalisée en technologie CMOS,
- au moins une ligne de la première matrice de détection est une matrice de détection de type TDI.

L'invention se rapporte également à un capteur d'images comprenant un capteur de mouvement selon l'invention et :

- une matrice dite de détection d'images comprenant plusieurs pixels photosensibles agencés en lignes et colonnes, des images d'une même scène étant successivement acquises par des lignes de pixels différentes de la deuxième matrice de détection d'images lors du déplacement du porteur,
- un circuit de génération d'images configuré pour délivrer de façon séquentielle des vecteurs de données d'image accumulés correspondant à des images lignes de différentes zones de la scène observées comprenant plusieurs composantes, chaque composante étant obtenue par accumulation de données d'image issues de signaux générés par des pixels de la matrice de détection d'images et correspondant sensiblement à une même région de la zone observé à différents instants au cours du déplacement du porteur.

Avantageusement, le circuit de génération d'image est configuré de façon à déterminer au moins une image ligne est déterminé à partir d'au moins une de la dite au moins une grandeur représentative du décalage.

Avantageusement, la matrice de détection d'images est la première matrice de détection.

Avantageusement, le circuit d'image est configuré pour utiliser au moins estimation d'une grandeur représentative du décalage pour former au moins une image ligne.

L'invention se rapporte également à un instrument optique spatial ou aéroporté d'acquisition d'images comprenant un capteur de mouvement selon l'invention et/ou un capteur d'images selon l'invention.

D'autres caractéristiques et avantages de l'invention apparaîtront à la lecture de la description détaillée qui suit, faite à titre d'exemple non limitatif et en référence aux dessins annexés dans lesquels :

- la figure 1, déjà décrite, représente le principe de fonctionnement d'un capteur d'images de type TDI,
- la figure 2 représente schématiquement un capteur de mouvement selon l'invention,
- les figures 3a et 3b représentent schématiquement un exemple de filtre et respectivement sa transformée de Fourier,
- la figure 4 représente de façon plus détaillée un exemple de capteur de mouvement selon l'invention,
- la figure 5 représente de façon très schématique un satellite comprenant un capteur de mouvement selon l'invention.

D'une figure à l'autre, les mêmes éléments sont repérés par les mêmes références.

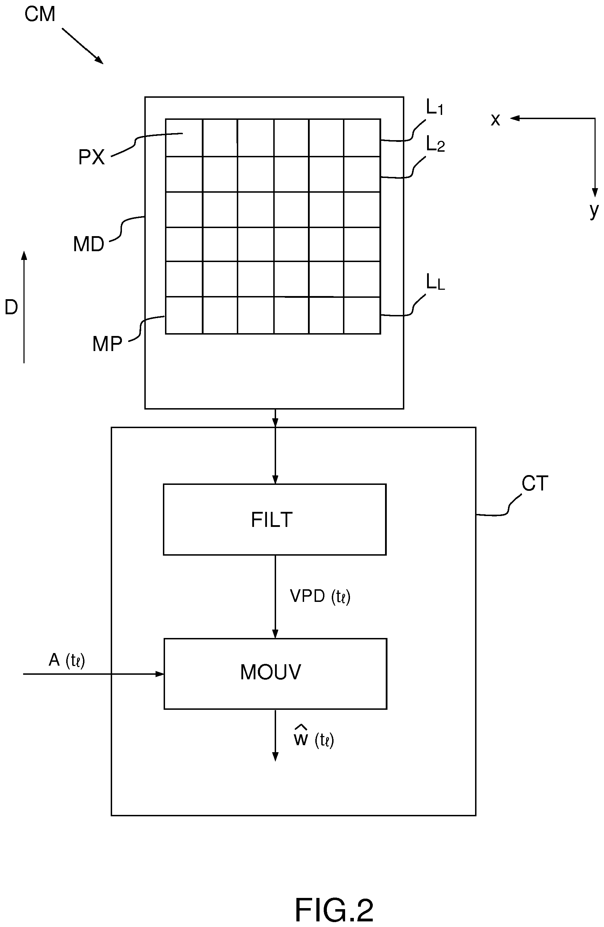

La figure 2 illustre un exemple de capteur de mouvement CM selon l'invention. Ce capteur CM comprend une matrice de détection MD comprenant une partie sensible comprenant des pixels photosensibles PX agencés en lignes (ou rangées) et en colonnes de sorte à former une matrice photosensible MP. Sur la figure 2, les lignes $L_k$ sont numérotées de 1 à L. Chaque ligne comprend C pixels. Le capteur fonctionne en mode rolling shutter. La matrice MP est disposée dans le plan focal d'un système optique SO. Une image optique formée par le système optique SO embarqué à bord du porteur PO défile sur la matrice dans la direction D avec un sens opposé à celui du capteur de sorte que des images d'une même scène soient successivement acquises par les lignes successives $L_k$ de la matrice lors du déplacement du porteur.

Ainsi, à un instant discret ou cycle d'horloge, une zone de la scène est projetée sur une ligne d'indice L du capteur. A un instant suivant, c'est-à-dire au cycle d'horloge suivant séparé du premier instant par une durée δt correspondant à la durée entre deux instants consécutifs ou la durée d'un cycle d'horloge, la même zone de la scène est projetée sur la ligne suivante d'ordre L-1. Autrement dit, la ligne de pixels de rang L-1 voit à un deuxième instant la même distribution d'intensité lumineuse vue par la ligne d'ordre L à l'instant précédent correspondant à une même ligne d'une image optique de la scène observée.

Chaque pixel PX du capteur élémentaire génère un signal représentatif d'une intensité lumineuse à chaque instant.

Le capteur de mouvement CM comprend un circuit de traitement CT. Ce circuit de traitement CT est configuré pour délivrer des mesures d'un bougé de ligne de visée à partir de signaux générés par des pixels de la matrice de détection MD.

Le circuit de traitement CT comprend un circuit de filtrage FILT configuré pour filtrer temporellement M séquences de N données d'image provenant de différents pixels de la matrice MD et correspondant sensiblement à une même région ou pixel au sol de la scène, observée à des instants d'observation différents aux cours du déplacement du porteur PO.

Le nombre N est un nombre entier prédéterminé et supérieur à 2 et inférieur ou égal à L. De façon avantageuse mais non limitative, N est égal à L (nombre de lignes de la matrice).

On entend par « donnée d'image » une valeur d'une grandeur représentant l'intensité lumineuse associée à un pixel. Les données d'image se présentent, par exemple, sous la forme de signaux électroniques numériques. Alternativement, les données d'image pourraient avoir une nature analogique comme nous le verrons ultérieurement.

Le circuit de filtrage FILT génère à un instant $t_l$ un vecteur dit de pseudo-données image VPD $(t_l)$. Le circuit de filtrage FILT produit une suite de vecteurs de pseudo-données d'image VPD $(t_l)$. Autrement dit, il produit à des instants successifs $t_l$, des vecteurs de pseudo-données d'image successifs VPD $(t_l)$. Chaque vecteur de pseudo-données d'image VPD $(t_l)$ est généré à partir de M séquences de N données d'image correspondant sensiblement à une même région de la scène, observée à des instants d'observation différents aux cours du temps. Chaque vecteur de pseudo-données d'image comprend M composantes, appelées pseudo-données d'image de rang c $PDIc$ $(t_l)$, avec c= 1 à M, chaque composante $PDIc$ $(t_l)$, étant générée à partir d'une séquence Ec de N pseudo-données d'image $DI_{c,k}(t_l - k)$ k = 1 à N. Les M séquences utilisées pour générer les M composantes d'un même vecteur de pseudo-données d'image comprennent N données d'image générées aux N mêmes instants successifs. Les N instants successifs sont différents d'un vecteur de pseudo-données d'image à l'autre. Au moins un instant diffère entre deux vecteurs de pseudo-données d'image consécutifs.

Les instants d'observation de la scène sont les mêmes pour les différentes séquences de données d'image à partir duquel un même vecteur de pseudo-donnée image est générée. Par exemple, les données d'image de chaque séquence ont été générées à N derniers instants consécutifs ou cycles d'horloge consécutifs qui précèdent l'instant ou le cycle d'horloge tl.

Chaque séquence Ec de N données d'image est filtrée par un filtre Fc à réponse impulsionnelle finie à N coefficients $\alpha_{c,k}$ avec k = 1 à N.

Autrement dit, le circuit de filtrage FILT fait, pour chaque séquence de N données d'image $DI_{c,k}(t_l - k)$ avec k = 1 à N, une combinaison linéaire de données d'image générées à N instants successifs.

Chaque pseudo-donnée d'image PDIc $(t_l)$ de rang (ou colonne) c (avec c= 1 à N) du vecteur de pseudo-données image VPD $(t_l)$ délivré à l'instant $t_l$ est obtenue par la formule suivante :

$$PDIc\,(t_l) = \sum_{k=1}^{N} \alpha_{c,k} DI_{c,k}(t_{l-k}).$$

Dans un premier mode de réalisation, chaque séquence de données d'image Ec est composée de données d'image $DI_{c,k}(t_{l-k})$ provenant de signaux générés par des pixels d'une même colonne de la matrice MD. Les différentes séquences de données d'image sont composées de données d'image provenant de colonnes respectives différentes de la matrice.

Dans un exemple non limitatif, $DI_{c,k}(t_l - k)$ est la donnée d'image issue d'un signal généré par le pixel de la colonne de rang c de la ligne Lk de rang k au à l'instant $t_{l-k}$. Autrement dit, chaque séquence de données d'image utilisée pour générer un vecteur de pseudo-données d'image à un instant $t_l$ est composée de données d'image provenant de signaux générés par des pixels consécutifs d'une colonne c à des instants de mesure consécutifs respectifs. Autrement dit, le module de filtrage FILT fait une combinaison linéaire d'une donnée d'image provenant d'un signal généré par un pixel de la colonne c et de la ligne de rang N à l'instant $t_{l-N}$, d'un signal généré par un pixel de la colonne c et de la ligne de rang N-1 à l'instant $t_{l-N+1}$, ...., d'un signal généré par un pixel de la colonne c et de la ligne de rang 1 à l'instant tl-1. Les données d'image provenant des pixels de la colonne c de la matrice de détection MD et des lignes de rang k sont pondérées par des coefficients respectifs $\alpha_{c,k}$ du filtre associé ($\alpha_{c,1}$,..,$\alpha_{c,k}$,...,$\alpha_{c,N}$).

Dans l'exemple précédent, en l'absence de vibrations, lorsque l'image formée sur la matrice MD se déplace selon un mouvement ou défilement de référence correspondant à une vitesse constante perpendiculaire aux lignes de pixels le long de la matrice MD telle que les pixels successifs d'une même colonne observent exactement la même scène aux instants consécutifs, alors à chaque instant $t_{l-k}$, la donnée d'image $DI_{c,k}(t_{l-k})$ issue d'un signal généré par le pixel de la colonne c de la ligne $L_k$ de rang k est notée :

$$DI_{c,k}(t_{l-k}) = sc\grave{e}ne(l, c)$$

Où *scène*(*l*, *c*) est la donnée d'image représentative du pixel de la scène observée de coordonnées l selon l'axe x et c selon l'axe y, c'est-à-dire la donnée d'image représentative du l-ième pixel de la scène observée selon l'axe des lignes x et du c-ième pixel de la scène observée selon l'axes des colonnes y.

Dans ce cas, la ligne de visée est constante.

Or, en présence de micro-vibrations, les lignes de pixels d'indices k successifs ne voient pas exactement la même zone de la scène observée, mais une version décalée dans le plan de la matrice M, dans direction horizontale et/ou dans la direction verticale. On obtient ainsi :

$$DI_{c,k}(t_{l-k}) = sc\grave{e}ne(\, l +\ v_{l-k}^{x}, c +\ v_{l-k}^{y}),$$

où le vecteur $B_{l-k} = (\, v_{l-k}^{x}, v_{l-k}^{y})$ représente un vecteur décalage correspondant au décalage, dans le plan de la matrice, entre le pixel de la scène vue par le pixel de rang l selon l'axe x et de rang k selon l'axe y, à un instant donné, et un pixel de référence que devrait voir ce pixel à ce même instant. Autrement dit, ce décalage est un décalage entre la donnée d'image obtenue à partir du signal généré par le pixel photosensible à l'instant donné et une donnée de référence obtenue à partir du signal généré au même instant par le même pixel photosensible lorsque la scène défile sur le capteur selon un mouvement de référence prédéterminé en l'absence de distorsions optiques. Ce mouvement de référence prédéterminé correspond par exemple, de façon non limitative, à une scène défilant sur la matrice MP de pixels photosensibles selon l'axe y à une vitesse constante. Cette vitesse constante est par exemple une vitesse telle que les pixels de deux lignes de pixels consécutives L-l-1 et voient la même partie de la scène à deux cycles d'horloges consécutifs, c'est-à-dire à deux instants consécutifs $t_{l-L-1}$ et $t_{l-L}$. Ce vecteur comprend une translation horizontale $v_{l-k}^{x}$ c'est-à-dire, selon l'axe x, perpendiculaire à la direction D c'est-à-dire parallèle à la direction longitudinale des lignes de pixels et une translation verticale, selon l'axe y, parallèle à la direction D ou parallèle à la direction longitudinale des colonnes de pixels.

Dans le cas d'un déplacement suffisamment faible (d'ordre sous-pixellique ou de quelques pixels), il est possible de linéariser l'équation précédente et on obtient :

$$DI_{c,k}(t_{l-k}) \approx sc\grave{e}ne(l, c) + v_{l-k}^{x}\, G_x(l, c) + v_{l-k}^{y} G_y(l, c)$$

où $G_x(l, c)$ et $G_y(l, c)$ désignent respectivement le gradient de l'image de la région de la scène observée à l'instant $t_l$ dans la direction x et le gradient de la scène dans la direction y au niveau du pixel de rang c de la scène observée à l'instant $t_l$. Le gradient d'une image selon une direction est la dérivée d'une grandeur représentative d'une intensité lumineuse selon cette direction.

La pseudo-donnée d'image *PDIc* ($t_l$) de rang (ou colonne) c (avec c= 1 à M) du vecteur de pseudo-données image VPD (tl) délivré à l'instant $t_l$ s'écrit alors :

$$PDIc\ (t_l) \approx \sum_{k=1}^{N} \alpha_{c,k}\ (scène(l,c) + v_{l-k}^x\ G_x(l,c) + v_{l-k}^y G_y(l,c))$$

Cette dernière formule fait apparaître des termes de convolution $w_l^x$ et $w_l^y$ du vecteur de convolution $w_l$ obtenu par convolution du filtre Fc et du vecteur de déplacement $B_l$ à un instant $t_l$

Les termes de convolution du vecteur de convolution $w_l$ à un instant $t_l$ sont donnés par les formules suivantes :

$$w_l^x = \sum_{k=1}^{N} \alpha_{c,k} v_{l-k}^x$$

$$w_l^y = \sum_{k=1}^{N} \alpha_{c,k} v_{l-k}^y .$$

On obtient alors :

$$PDIc\ (t_l) \approx scène(l,c) * \sum_{k=1}^{N} \alpha_{c,k} + w_l^x\ G_x(l,c) + w_l^y G_y(l,c).$$

Par conséquent, connaissant la somme des coefficients $\alpha_{c,k}$ pour k= 1 à N, il est possible d'estimer, à partir de *PDIc* ($t_l$), une donnée représentative du bougé.

Avantageusement, afin de faciliter l'estimation d'une grandeur représentative du mouvement, on fixe $\sum_{k=1}^{N} \alpha_{c,k} = 0$ alors :

$$PDIc\ (t_l) \approx w_l^x\ G_x(l,c) + w_l^y G_y(l,c)$$

Dans ce cas, le filtrage temporel d'une séquence de données d'image revient à convoluer le bougé de la ligne de visée ou de l'image de la scène observée sur les pixels de la matrice.

Ceci étant valable pour toutes les colonnes c, on obtient un système linéaire surdéterminé

$$VPD\ (tl) = \boldsymbol{A}(t_l)\ w(t_l)$$

où A($t_l$) une matrice de taille Cx2 dont la c-ième ligne est donnée par ($G_x(l, c)$, $G_y(l, c)$).

Le vecteur de convolution $w(t_l) = \left(w_l^x, w_l^y\right)^T$ est une grandeur représentative du bougé décalage ou bougé d'une image de la scène observée sur les pixels de la matrice, c'est-à-dire la ligne de visée dans le plan de la matrice de détection à l'instant **$t_l$** par rapport à scène de référence ou respectivement par rapport à une ligne de visée de référence.

Une estimation de ce vecteur peut être par exemple obtenue par une approche de type moindres carrés impliquant l'inversion d'une matrice 2x2. L'estimée de w, alors notée $\hat{w}$ est obtenue par l'équation suivante.

$$\widehat{w} = (A^T A)^{-1} A^T \mathbf{VPD}$$

Il est à noter que la résolution du système surdéterminé peut être réalisée par tout autre type de méthode de résolution d'un système linéaire surdéterminé. On peut avantageusement résoudre ce problème par moindre carrés ou moindres carrés régularisés ou par régression en fonction des composantes principales.

En variante, la somme des coefficients n'est pas nulle. Dans ce cas, on utilise une donnée de référence permettant de mesurer la radiométrie de référence de la scène. Cette donnée peut provenir d'un procédé de mesure particulier associé au capteur utilisé dans cette invention ou à un capteur dédié.

L'invention tire profit de la possibilité de déduire, du filtrage temporel de séquences de données d'image et d'un gradient de l'image, une estimation d'une grandeur représentative du bougé.

Ainsi, le circuit de traitement CT comprend un module d'estimation de mouvement MOUV configuré pour estimer au moins une grandeur représentative d'un décalage de la ligne de visée dans le plan de la matrice à partir d'un vecteur de pseudo-données d'image VPD $(t_l)$ généré à un instant $t_l$ et à partir du gradient de l'image.

Le module d'estimation de mouvement MOUV est par exemple configuré pour estimer $w(t_l)$. Il peut être en outre configuré pour estimer un bougé à partir de l'estimée de $w(t_l)$ notée $\hat{w}(t_l)$.

La séquence des gains $\alpha_{c,k}$ étant connue, il est envisageable de configurer le module d'estimation de mouvement pour déconvoluer les signaux $\left(w_l^x, w_l^y\right)^T$ de manière à estimer $\left(v_l^x, v_l^y\right)^T$. Le module d'estimation de mouvement peut aussi être configuré pour calculer la transposée de $\left(v_l^x, v_l^y\right)^T$ de façon à obtenir une estimation du mouvement $\left(v_l^x, v_l^y\right)$.

L'utilisation d'un filtre intégrateur appliqué au signal décrit précédemment permet éventuellement de compenser le filtre utilisé dans FILT et de remonter à une valeur d'attitude en absolu.

Ainsi, une grandeur représentative du bougé, pouvant être le bougé, est estimée directement à partir de signaux générés par une matrice de pixels photosensibles. On peut parler de détection de bougé intrinsèque. Cette solution évite ainsi l'utilisation de gyroscopes.

Cette approche est simple à mettre en œuvre ce qui permet d'intégrer le circuit de traitement au plus près de la matrice de pixels photosensibles. Il peut être mis en place au plus proche de la puce également utilisée pour la mission nominale (de génération d'images lignes) et son emport a donc très peu d'impact sur l'architecture satellite dans son ensemble.

Avantageusement, mais non nécessairement, les différents éléments constituant le capteur sont intégrés au sein d'une même puce.

L'invention permet la mesure du bougé uniquement à partir de signaux générés par une matrice de pixels photosensibles. L'invention permet d'éviter l'utilisation de capteurs non standards pour la mesure du bougé.

L'estimation du bougé dans deux dimensions à un instant donné est réalisée à partir d'un unique vecteur de pseudo-données d'image dont les composantes sont obtenues par combinaison linéaires de données d'image générées à N mêmes instants successifs. Autrement dit, le module d'estimation d'un mouvement est configuré pour estimer au moins une grandeur représentative du décalage à partir d'un unique ensemble de pseudo-données d'image prise parmi lesdites pseudo-données d'image, les pseudo-données d'image dudit ensemble étant déterminée à partir de séquence de données d'image correspondant à différentes régions de la scène observées aux mêmes N instants différents. Un espace mémoire et une puissance de calcul nécessaires à l'estimation du bougé sont ainsi limités. Cela permet de réaliser l'estimation du bougé en temps réel. Par ailleurs, l'invention permettant de générer des vecteurs de données d'image successifs aux cycles d'horloge consécutifs (auxquels sont générés les signaux d'image successifs par la matrice de pixels), elle permet de générer des estimations d'une grandeur représentative du bougé à chaque cycle d'horloge. Bien entendu, l'estimation d'une grandeur représentative du bougé n'est pas obligatoirement déterminé à chaque cycle d'horloge.

L'estimation d'un bougé d'une image formée sur les pixels est réalisé à partir de données d'image provenant de plus de deux acquisitions successives. Cette solution permet d'accéder à une estimation précise du bougé.

La solution proposée permet d'estimer des bougés à des fréquences élevées pouvant aller jusqu'à plusieurs kHz selon la fréquence ligne du détecteur. En effet, les bougés estimés sont échantillonnés à la constante de temps du capteur TDI, c'est-à-dire générés à chaque cycle d'horloge. La fréquence maximale de restitution est donnée par la moitié de la fréquence d'échantillonnage, selon le théorème de Shannon.

Par ailleurs, la technologie des matrices de pixels photosensibles permet de réaliser une estimation d'une grandeur représentative du bougé avec une précision adaptée à la résolution de l'image. En effet, plus la taille des pixels est faible, meilleure est la résolution de l'image et plus précise est la mesure du bougé.

L'invention permet également de générer de façon simultanée, une estimation du bougé et une image ligne de la région observée, obtenue par accumulation de données d'image, en prévoyant une seconde voie de traitement des données d'image générées par la matrice de pixels photosensibles comme nous le verrons par la suite. Le capteur de mouvement est alors également un capteur d'images.

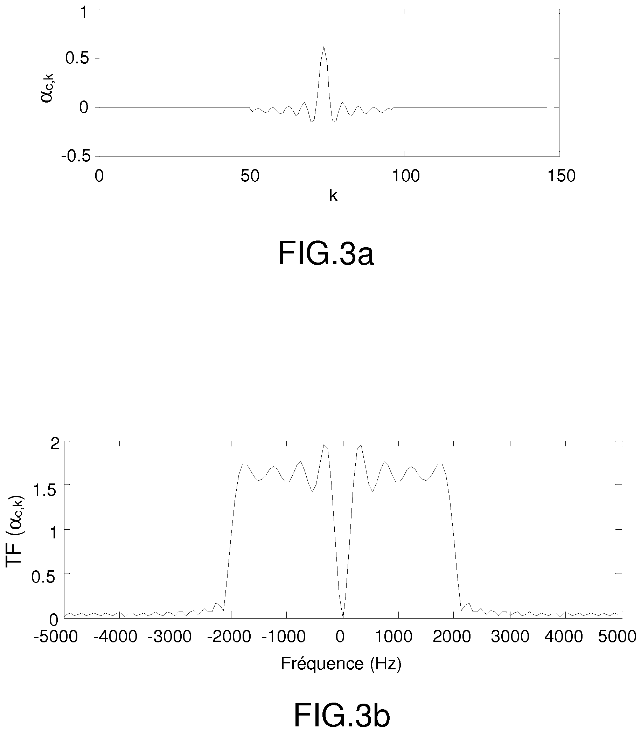

Il existe une certaine latitude dans le choix des coefficients des filtres. De manière générale, il est préférable d'implémenter un filtre passe-bas afin de préserver le contenu fréquentiel des signaux de micro-vibrations. Le choix de celui-ci pourra être affiné en fonction de connaissances a priori sur le bougé de ligne de visée. Un exemple d'un tel filtre est représenté sur les figures 3a et 3b. Sur la figure 3a, le filtre $\alpha_{c,k}$ est une courbe continue en forme de sinus cardinal en fonction de k. Le filtre présente 46 coefficients dont les valeurs sont les amplitudes de la courbe aux abscisses discrètes allant de 50 à 96 par incréments de 1. Sur la figure 3b, on a représenté la transformée de Fourier TF de la courbe de la figure 3a. Cette courbe représente bien un filtre passe-bas dont la fréquence de coupure est sensiblement de 2000 Hz. Le filtre à réponse impulsionnelle fini formé par les 46 coefficients pris le long de l'abscisse de la figure 3a, forme un filtre fréquentiel passe-bas. Il est à noter que la transformée de Fourier TF du filtre à réponse impulsionnelle finie représente la fonction de transfert appliquée au bougé.

La possibilité de choisir les coefficients des filtres à réponse impulsionnelle finie permet de réaliser différents type de filtres et notamment de choisir des domaines de fréquences du bougé filtrées. L'invention permet de déterminer des composantes hautes fréquences du bougé. Elle permet également de privilégier l'estimation de certaines composantes fréquentielles ou d'estimer séparément plusieurs composantes fréquentielles du bougé. Cela permet d'optimiser le bruit de l'erreur sur la mesure du bougé. Si l'on dispose d'un à priori sur les fréquences du bougé, on peut sélectionner ces bandes de fréquence, négligeant ainsi les bandes de fréquence où le bruit domine.

Avantageusement, les filtres Fc sont définis de façon à former des filtres spectraux passe-bas ou passe-bande permettant de filtrer une bande de fréquences prédéterminée du bougé de la ligne de visé. Le module d'estimation de mouvement estime alors une grandeur représentative du bougé dans la bande de fréquences considérée.

On peut filtrer un nombre M égal au nombre de colonnes C de la matrice de pixels. En variante, le nombre M est supérieur ou égal à 1, et inférieur à C ce qui signifie que l'on peut utiliser seulement une partie de la matrice de détection pour détecter le mouvement. Cela permet de limiter un espace mémoire et une puissance de calcul nécessaires pour réaliser l'estimation du mouvement. M peut être compris entre 1 et C. Avantageusement M est supérieur à 1. Lorsque l'on filtre une unique séquence de données d'image, on obtient une unique pseudo-donnée d'image.

Lorsque l'on filtre un nombre M supérieur à 1 de séquences Ec données d'image, les filtres Fc utilisés pour filtrer les différentes séquences peuvent être identiques ou différents.

Il est en particulier possible de prévoir des filtres filtrant des bandes de fréquences distinctes et d'estimer plusieurs grandeurs représentatives du bougé à partir de composantes respectives du données images issues de filtres filtrant des bandes de fréquences respectives En ciblant indépendamment certaines gabarits spectraux on peut ainsi améliorer les performances d'estimation du bougé selon les régions du spectre ciblées. On peut par exemple filtrer les données d'image issues de la moitié gauche de la matrice de pixels au moyen de premiers filtres identiques et celles issues de la moitié gauche de la matrice de pixels au moyen de deuxièmes filtres identiques. Chaque premier filtre forme par exemple un filtre passe-bande centré sur 100 Hz et chaque deuxième filtre forme par exemple un filtre passe-bas dont la fréquence de coupure est inférieure à 100 Hz. On peut ainsi estimer séparément des composantes fréquentielles distinctes du bougé (une basse fréquence et une à 100 Hz dans l'exemple ci-dessus), en utilisant séparément les composantes du vecteur de pseudo-données d'image obtenues en sortie des premiers filtres et celles obtenues en sortie des deuxièmes filtres pour réaliser des estimations distinctes de grandeurs représentatives du bougé. Cette solution présente l'avantage de ne pas nécessiter d'espace mémoire ni de puissance de calcul supplémentaire que dans le cas où tous les filtres sont identiques. On peut en variante prévoir un ensemble de filtres passe-bande dont la bande passante correspond à la bande passante d'un dispositif de contrôle d'orbite et d'attitude du satellite AOCS (« Attitude and Orbit Control System). Cela permet d'estimer un bougé lié à un résidu de correction de ce dispositif en vue de compenser ce bougé au moyen de ce dispositif. On peut prévoir en parallèle des filtres passe-bande centré sur une fréquence supérieure à la fréquence centrale de la bande passante de l'AOCS. Les sorties de ces filtres permettent d'estimer le bougé à plus haute fréquence en vue de compenser les vibrations haute fréquence.

Il est possible, en variante, de filtrer en parallèle les même séquences de pseudo-données d'image (par exemples les C séquences de pseudo-données d'image) au moyen de filtres différents. Cette solution nécessite toutefois une puissance de calcul et une capacité de mémoire supplémentaires.

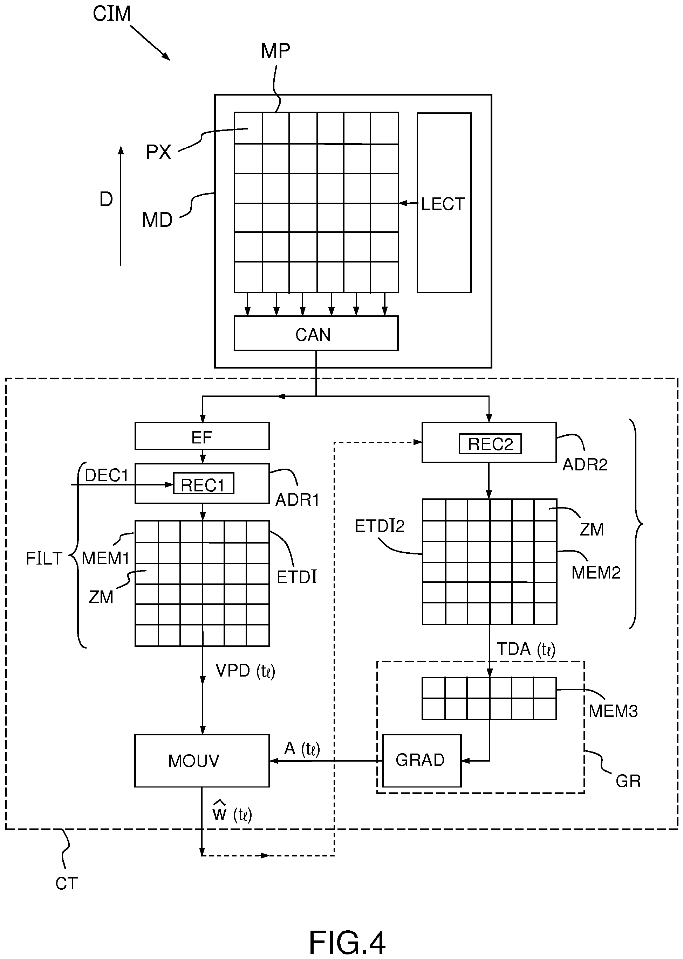

Sur la figure 4, on a représenté de façon plus précise le mode de réalisation de la figure 2 dans lequel la matrice MD est réalisée en technologie CMOS.

La matrice de détection MD comprend un circuit de lecture LECT permettant de lire de façon séquentielle, à chaque instant discret ou cycle d'horloge, les signaux générés par les différents pixels de la matrice de pixels pendant le cycle d'horloge, c'est-à-dire pendant la période de détection élémentaire δt. Ces signaux se présentent classiquement sous la forme de tensions représentatives d'une intensité lumineuse associée au pixel.

Le capteur élémentaire comprend un circuit de conversion analogique numérique CAN comprenant un ensemble de convertisseurs analogiques numériques configurés pour élaborer les données d'image en venant numériser les tensions lues par le circuit de lecture. Le circuit de conversion analogique numérique CAN peut par exemple comprendre un convertisseur analogique numérique par colonne de la matrice de pixels. Alternativement, la conversion analogique numérique est réalisée par le circuit de traitement CT.

Le circuit de filtrage FILT comprend une première mémoire d'accumulation MEM1 comprenant une pluralité de zones mémoire ZM où chaque zone mémoire ZM stocke des données d'image $DI_{c,k}(t_{l-k})$ correspondant sensiblement à une même région (ou pixel) de la scène, ladite région étant observée à des instants successifs $t_{l-k}$ au cours du déplacement du porteur.

Le circuit de filtrage FILT comprend plus précisément un ensemble EF de filtres Fc à réponse impulsionnelle finie qui reçoivent séquentiellement les données d'image successives $DI_{c,k}(t_{l-k})$ correspondant sensiblement à une même région de la scène observée, qui multiplient les données d'image qu'ils reçoivent successivement par les coefficients successifs des filtres et délivrent les produits ainsi obtenu à un circuit d'adressage ADR qui adresse les produits vers la première mémoire MEM1 de sorte que les N produits successifs obtenus au cours du déplacement du porteur PO à partir de données d'image correspondant sensiblement à une même région de la scène soient accumulés dans une même zone mémoire ZM .

La mémoire se présente sous la forme d'une matrice comprenant une pluralité d'étages d'accumulation ETDI1 (ou étages TDI). Le contenu de chaque étage après accumulation des N produits est un vecteur de pseudo-données d'image VPD. Ainsi chaque étage TDI, ETDI1 comprend C zones mémoire ZM. Chaque étage ETDI1 comprend une pluralité de zones mémoire destinées à accumuler (c'est-à-dire additionner) des produits reçus. La mémoire fonctionne comme un registre à décalage : à chaque pas d'accumulation, lorsqu'un vecteur de pseudo-données d'image est obtenu, les autres vecteurs en cours d'accumulation se déplacent d'un étage et un nouveau vecteur de données d'image commence à se former par accumulation.

Ainsi, le mode de réalisation de la figure 4 nécessite des zones mémoire dédiées à l'accumulation des produits.

Les filtres temporels Fc respectifs peuvent recevoir les données d'image issues des colonnes respectives de la matrice de pixels comme décrit précédemment. Ainsi, lorsque la ligne de visée subit des perturbations, les données d'image successives $DI_{c,k}(t_{l-k})$ (avec k=1 à N) ne sont correspondent pas exactement à une même région de la scène observée à différents instants mais sensiblement à la même région, c'est-à-dire au bougé près.

En variante, de façon avantageuse comme représenté sur la figure 4, le circuit de traitement CT comprend, comme visible sur la figure 4, un circuit de recalage REC qui utilise un premier décalage DEC1 de la ligne de visée et est configuré pour recaler les données d'image de sorte à corriger le premier décalage de façon que chaque pseudo-données image soit généré à partir d'une séquence de N données d'image correspondant sensiblement à une même région de la scène observée aux N instants d'observation lors du déplacement du porteur. Lorsque le premier décalage n'est pas le décalage exact, les N données d'image ne correspondent pas exactement à une même région de la scène observée mais à un décalage résiduel près après correction du premier décalage.

Ainsi la grandeur estimée lors du procédé selon l'invention est représentative du décalage ou bougé résiduel après correction du premier décalage. Cela permet d'améliorer la précision du décalage estimé dans le cas de décalages importants dans la mesure où l'approximation linéaire est valable pour des bougés faibles.

Dans l'exemple non limitatif de la figure 4, le circuit de recalage REC1 est compris dans le circuit d'adressage ADR2. Le circuit de recalage REC1 utilise le premier décalage DEC1 pour définir la zone mémoire de la première mémoire d'accumulation dans laquelle va être accumulé un produit d'un filtrage de sorte que le produit soit accumulé avec des données d'image relatives sensiblement à un même point de la scène.

Le premier décalage peut provenir d'un autre capteur à bord.

En variante, le premier décalage utilisé pour calculer l'adresse de la zone mémoire où est accumulé un produit obtenu à partir d'une donnée issue d'un signal généré à un instant $t_{l-k}$ peut être calculé, à partir d'au moins une sortie précédente du module d'estimation de mouvement Le signal généré à l'instant tl-k peut par exemple être calculé à partir d'au moins une sortie précédente du module d'estimation par propagation de signal pour estimer le déplacement du porteur à l'instant $t_{l-k}$.

Lorsque la matrice de détection M est réalisée en technologie CMOS, il est possible de réaliser simultanément une estimation d'une grandeur représentative du bougé (ou décalage) et de générer simultanément des images à partir de signaux générés par la matrice de détection M.

Dans l'exemple non limitatif représenté sur la figure 4, le capteur de mouvement est un capteur d'images du type dit « par décalage temporel et intégration » ou TDI de l'anglais « Time Delay and Intégration ». Autrement dit, ce capteur est configuré pour délivrer de façon séquentielle des vecteurs de données d'image accumulés TDA(tl) correspondant à des images lignes de différentes régions de la scène observées. Une image ligne d'une zone de la scène observée comprend plusieurs composantes. Chaque composante correspond à l'image d'une région (ou pixel) de la scène. Chaque composante de l'image ligne est obtenue par accumulation de données d'image issues de signaux générés par des pixels de la matrice de pixels PX et correspondant sensiblement à une même de la zone ou ligne de pixels la scène observée à différents instants au cours du déplacement du porteur. Chaque vecteur de données d'image accumulé TDA(tl) est représentatif sensiblement d'une même ligne de la scène observée, intégrée sur N cycles d'horloge.

A cet effet, le circuit de traitement CT de la figure 4 comprend un circuit de génération d'images CI qui délivre une suite vecteurs de données image accumulés aussi appelés images lignes.

Le circuit de génération d'images CI comprend également une deuxième mémoire d'accumulation MEM2 comprenant une pluralité de zones mémoire où chaque zone mémoire accumule des données d'image correspondant sensiblement à une même région de la scène observée.

La deuxième mémoire MEM2 se présente, comme la première mémoire, sous la forme d'une matrice comprenant une pluralité d'étages d'accumulation (ou étages TDI). Le contenu de chaque étage après accumulation des N produits est un vecteur de données d'image. Ainsi chaque étage TDI, TDI2 comprend C zones mémoire. Chaque étage ETDI2 comprend une pluralité de zones mémoire ZM destinées à accumuler (c'est-à-dire additionner) les données d'image. La mémoire fonctionne comme un registre à décalage : à chaque pas d'accumulation (durée entre deux instants consécutifs séparés par δt), lorsqu'un vecteur de données d'image accumulé est obtenu, les autres vecteurs en cours d'accumulation se déplacent d'un étage et un nouveau vecteur de données d'image accumulé commence à se former par accumulation.

Le circuit de génération d'images CI additionne par exemple, colonne par colonne, les signaux générés par les pixels de la ligne de rang N à l'instant tl-N, ceux de la ligne de rang N-1 à l'instant tl-N+1, ...., ceux générés par la ligne de rang 1 à l'instant tl-1. Chaque vecteur de données d'image accumulé TDA (tl) est composé de C données d'image accumulées DIAc obtenues par la formule suivante :

$$DIAc\,(t_l) = \sum_{k=1}^{N} DI_{c,k}(t_l - k)$$

Toutefois, cette solution présente un intérêt limité dans la mesure où le décalage n'est pas corrigé.

Ainsi, avantageusement mais non nécessairement, comme représenté sur la figure 4, le circuit de génération d'image CI comprend un deuxième module de recalage REC2 qui recale une adresse d'une zone mémoire où doit être réalisée l'accumulation d'une donnée image issu d'un des pixels de la matrice de détection d'images avec d'autres données d'image à partir du premier décalage, c'est-à-dire à partir d'une estimation réalisée par le module d'estimation de mouvement MOUV. Autrement dit, de façon plus générale non limitée à l'exemple décrit ci-dessus, au moins une donnée d'image accumulée ou un vecteur de donnée d'image accumulé (c'est-à-dire au moins un image ligne) est déterminé(e) à partir d'au moins une estimation réalisée par le module d'estimation de mouvement. En variante, le deuxième module de recalage utilise un deuxième décalage pour recaler une adresse mémoire.

En variante, le capteur de mouvement ne délivre pas de données d'image. Il ne comprend pas de circuit de génération d'images.

En variante, les images ligne sont générées à partir de signaux issus d'une autre matrice de détection. Le capteur comprend alors plusieurs matrices de pixels.

Avantageusement, comme représenté sur la figure 4, le gradient d'image A(t$_l$) est estimé à partir de données d'image provenant de la matrice de détection M. Cela permet de restituer le bougé de façon très précise. Sur la réalisation de la figure 4, le circuit de traitement CT comprend un module GRAD de calcul d'un gradient spatial A(t$_l$) à partir de signaux générés par des pixels de la matrice de détection.

Sur l'exemple non limitatif de la figure 2, le circuit GR de calcul du gradient d'image A(t$_l$) calcule le gradient, aussi appelé gradient spatial, à partir de plusieurs images lignes TDA(t$_l$) générées par le circuit de génération d'image. Une méthode classique de calcul du gradient d'image est utilisée. Le module de gradient d'image est par exemple calculé à partir de l'image ligne TDA(t$_l$) générée à l'instant t$_l$ et au moins une image ligne générée à un instant précédent l'instant t$_l$. A cet effet, le circuit de calcul du gradient GR comprend une troisième mémoire MEM3 configurée pour mémoriser au moins une image ligne, par exemple 2, et un module de calcul du gradient GRAD configuré pour faire au moins une différence entre deux images lignes (par exemple entre une image ligne généré à l'instant précédent l'instant t$_l$ et mémorisée dans la troisième mémoire) et l'image ligne générée à l'instant tl et mémorisée dans la deuxième mémoire et/ou pour faire des différences entre des pixels adjacents d'une même image ligne et pour en déduire le gradient A(t$_l$).

En variante, le circuit de calcul de gradient est configuré pour déterminer le gradient à partir de séquences de données d'image générées par des pixels de la matrice de détection, les données d'image d'une même séquence de données d'image correspondant sensiblement à une même région de la scène observée à des instants différents, le circuit de calcul du gradient étant configuré pour filtrer les séquences de données d'image par des filtres à réponse impulsionnelle finie respectifs préalablement à la détermination du gradient de sorte à appliquer des poids respectifs aux données d'image des séquences de données d'image, les poids positifs appliqués aux données d'image d'une même séquence décroissant avec l'ancienneté des données d'image de la séquence. Ce filtrage passe-bas des données (filtrage en ligne et en colonne) permet de réduire le bruit d'estimation du gradient

En variante, le module de calcul du gradient GRAD pourrait être configuré pour calculer d'une autre manière le gradient directement à partir de données générées par une matrice de sites photosensibles.

En variante, le gradient est fourni par un autre capteur ou est déterminé par le circuit de traitement CT à partir d'une autre matrice de pixels photosensibles. Le capteur comprend alors plusieurs matrices de pixels photosensibles.

Le module d'estimation du mouvement MOUV est configuré pour déterminer au moins une grandeur représentative du bougé à partir du gradient $A(t_l)$ d'une image d'une zone de la scène observée et du vecteur pseudo-données d'image $VPD(t_l)$ correspondant à la même zone scène observée.

La matrice peut être réalisée en technologie CMOS comme décrit précédemment.

En variante, au moins une ligne de pixels est formée d'une ligne de pixels élémentaire, par exemple réalisée en technologie CMOS et / ou au moins une ligne de pixels est une matrice élémentaire de type TDI.

Par exemple, au moins une ligne de pixels de la matrice de pixels est une matrice élémentaire TDI comprenant une pluralité de lignes de pixels photosensibles comprenant le même nombre de colonnes que la matrice de pixels M. Cette matrice élémentaire est configurée pour opérer un transfert, de pixels en pixels le long de chaque colonne de la matrice élémentaire, parallèlement au défilement D, de charges photo-électriques générées par chaque pixel. Il s'agit par exemple d'une matrice TDI réalisée en technologie CCD (dispositifs à transfert de charge, de l'anglais « Charge-Coupled Device). Cette matrice réalise une intégration TDI des signaux générés par la matrice, sur les lignes de pixels la matrice élémentaire, pendant chaque cycle d'horloge de cette matrice afin de générer une ligne de C charges photoélectriques dite intégrée à chaque cycle d'horloge. Avantageusement, la matrice élémentaire comprend un convertisseur permettant de convertir les charges photo-électriques de la ligne de charges photoélectrique intégrée en une tension. En variante, cette matrice élémentaire réalisée en technologie CMOS.

En variante, on utilise plusieurs matrices de détection de type TDI en technologie CCD. Des gains ou coefficients des filtres sont alors appliqués de façon analogique. On peut par exemple appliquer des gains aux pixels au moyen de moyens d'amplification par ionisation par impact (en utilisant un design de diode et un fonctionnement adapté) avant transfert des charges photoélectriques le long des colonnes. La sommation des produits du filtre est directement faite pas transfert des charges le long des colonnes. Toutefois, ce type de solution permet uniquement d'appliquer des gains positifs. Or, les coefficients des filtres à réponse impulsionnelle finie peuvent être positifs et négatifs. On prévoit donc deux matrices de détection de type TDI en technologie CCD, une première matrice générant des signaux sur lesquels on applique les coefficients positifs du filtre et une deuxième matrice générant des signaux sur lesquels on applique les opposés des coefficients négatifs du filtre et on soustrait, après numérisation des lignes TDI, une ligne TDI obtenue en sortie de la deuxième matrice de détection à celle obtenue en sortie de la première matrice de détection de façon à obtenir un vecteur de pseudo-données d'image. Les matrices sont favorablement disposées de façon à observer la même scène de consécutivement. Autrement dit, elles sont avantageusement alignées selon l'axe y.

Le recalage peut être directement fait au sein des matrices de détection.

Une autre matrice de détection est alors nécessaire pour générer les images lignes. Elle peut être du type TDI en technologie CCD ou CMOS.

Avantageusement, le circuit de traitement est configuré pour effectuer une étape correction radiométrique préalablement à l'estimation du décalage.

Les modules de calcul MOUV, GRAD peuvent être réalisés à partir de composants logiques programmables tel qu'un FPGA, mais il peut également s'agir de processeurs programmés de façon opportune.

L'invention se rapporte également à un procédé de détection de mouvement et éventuellement de génération d'images lignes pouvant être mis en œuvre au moyen du capteur ou dispositif selon l'invention. Dans ce procédé, le capteur est embarqué à bord d'un porteur se déplaçant au-dessus d'une scène de sorte que des images d'une même scène étant successivement acquises par des lignes de pixels différentes de la première matrice de détection d'images M lors du déplacement du porteur. comprend au moins une des étapes telles qui décrites précédemment et pouvant être mises en œuvre par le circuit de traitement CT et éventuellement une étape de génération du gradient.

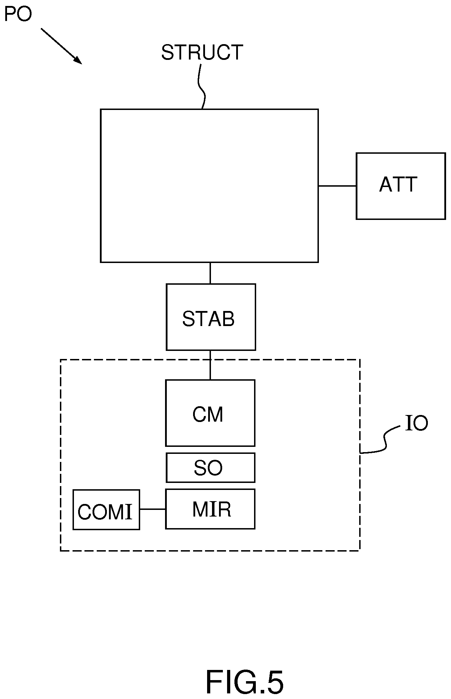

La figure 5 illustre très schématiquement un porteur PO (par exemple un vaisseau spatial, et plus particulièrement un satellite) équipé d'un instrument optique d'acquisition d'images IO comprenant un système optique conventionnel SO, par exemple un télescope, couplé à un capteur de mouvement CM selon un mode de réalisation de l'invention. Le système optique SO est configuré pour former une image de la scène sur les pixels de la matrice de détection MD ou la matrice MP qui est avantageusement située dans le plan focal du système optique SO. Le porteur PO comprend avantageusement un dispositif de contrôle de l'attitude ATT du porteur PO qui est configuré pour contrôler l'attitude du porteur PO à partir d'une estimation d'une grandeur représentative du bougé délivrée par le module d'estimation de mouvement MOUV.

Le satellite comprend avantageusement un dispositif de stabilisation STAB comprenant par exemple un miroir de stabilisation de ligne de visée tip-tilt (ou FSM en référence à l'expression anglo-saxonne « Fast Steering Mirror ») permettant de contrôler l'orientation de la matrice de détection MD par rapport à une structure STRUCT du porteur PO, configuré pour contrôler l'orientation de la matrice de détection MD ou de la matrice MP par rapport à la structure STRUCT à partir d'une estimation d'une grandeur représentative du bougé délivrée par le module d'estimation de mouvement MOUV.

L'instrument optique IO comprend avantageusement un miroir MIR configuré pour former une image de la scène observée sur les pixels de la matrice de détection M, et un dispositif de contrôle COMI permettant de contrôler l'orientation du miroir par rapport à la matrice de détection configuré pour contrôler l'orientation du miroir à partir d'une estimation d'une grandeur représentative du bougé délivrée par le module d'estimation de mouvement MOUV. Le dispositif de contrôle de l'orientation COMI comprend notamment un actionneur permettant de modifier l'orientation du miroir.

De façon plus générale, l'invention se rapporte à un système mécanique comprenant capteur de mouvement selon l'invention et un actionneur et/ou un contrôleur configuré pour actionner et/ou respectivement contrôler un dispositif mécanique à partir d'au moins une estimation du bougé issue du capteur de mouvement. Elle se rapporte également à un porteur comprenant un système mécanique selon l'invention.

L'invention se rapporte également à un procédé général comprenant une étape d'estimation d'une grandeur représentative du bougé et une autre étape utilisant cette estimation. Cette dernière étape est par exemple une des étapes décrites ci-dessus en référence à la figure 5 ou une étape d'utilisation de cette grandeur pour générer une image ligne comme décrit précédemment.

Un autre avantage de l'invention est de permettre de i mesurer les distorsions optiques et défauts d'alignement de l'instrument dans la mesure où ces perturbations impactent la ligne de visée. L'invention est par définition sensible à tous les paramètres affectant la bonne sommation des étages TDI, c'est-à-dire générant de la désynchronisation.

## Revendications

1. Capteur de mouvement (CM) destiné à être embarqué dans un porteur se déplaçant au-dessus d'une scène et destiné à être soumis à des vibrations lors de son déplacement, le capteur de mouvement (CM) comprenant :

   - au moins une première matrice dite de détection (MD) comprenant plusieurs pixels photosensibles (PX) agencés en L lignes et C colonnes de sorte que des images d'une même scène soient successivement acquises par des lignes de pixels différentes de la première matrice de détection (MD) lors du déplacement du porteur pour que les pixels photosensibles génèrent des données d'images,
   - un circuit de traitement (CT) de signaux comprenant :

     - un circuit de filtrage (FILT) configuré pour filtrer, au moins une séquence de N données d'image générées par des pixels de ladite première matrice de détection et correspondant sensiblement à une même région de la scène observée à N instants différents, N étant prédéterminé et supérieur à 2, de sorte à générer au moins une pseudo-donnée d'image, ladite séquence de N données d'image étant filtrée par un filtre à réponse impulsionnelle finie à N coefficients,
     - un module d'estimation d'un mouvement (MOUV) configuré pour estimer au moins une grandeur représentative d'un décalage entre une donnée d'image issue d'un pixel photosensible et une donnée d'image de référence, à partir de la pseudo-donnée d'image générée et à partir d'un gradient d'une image de la même région de la scène.

2. Capteur de mouvement selon la revendication précédente, dans lequel le circuit de filtrage est configuré pour filtrer plusieurs séquences de N données d'image de sorte à générer plusieurs pseudo-données d'image, le module d'estimation d'un mouvement est configuré pour estimer ladite au moins une grandeur représentative du décalage à partir d'un unique ensemble de pseudo-données d'image prise parmi lesdites pseudo-données d'image, les pseudo-données d'image dudit ensemble étant déterminée à partir de séquence de données d'image correspondant à différentes régions de la scène observées aux mêmes N instants différents.

3. Capteur de mouvement selon l'une quelconque des revendications précédentes, dans lequel au moins un filtre est défini de façon à former un filtre spectral passe-bas ou passe-bande permettant de filtrer une bande de fréquences prédéterminée du décalage.

4. Capteur de mouvement selon la revendication précédente, dans lequel la somme des coefficients $\alpha_{c,k}$ avec k= 1 à N des filtres est nulle.

5. Capteur de mouvement selon l'une quelconque des revendications précédentes, dans lequel le circuit de filtrage (FILT) est configuré pour filtrer une pluralité de séquences de N données d'image générées par des pixels de ladite première matrice de détection (MD) et correspondant à différentes régions de la scène observées aux N instants différents, les différentes séquences étant filtrées par des filtres à réponse impulsionnelle finie à N coefficients identiques.

6. Capteur de mouvement selon l'une quelconque des revendications 1 à 4, dans lequel le circuit de filtrage (FILT) est configuré pour filtrer une pluralité de séquences de N données d'image générées par des pixels de ladite première matrice de détection (MD) par des filtres à réponse impulsionnelle finie à N coefficients distincts, le module d'estimation du mouvement (MOUV) étant configuré pour estimer des grandeurs représentatives du mouvement à partir de données de pseudo-image respectives issues de filtres distincts.

7. Capteur de mouvement selon la revendication précédente, dans lequel les filtres distincts agissent sur des séquences de données d'image distinctes correspondant à différentes régions de la scène observées aux N instants différents.

8. Capteur de mouvement selon l'une quelconque des revendications précédentes, comprenant un circuit de recalage (REC1) qui utilise un premier décalage et est configuré pour recaler au moins une données d'image de sorte à corriger le premier décalage de façon que la pseudo-données image soit généré à partir d'une séquence de N données d'image correspondant sensiblement à une même région de la scène observée aux N instants d'observation lors du déplacement du porteur.

9. Capteur de mouvement selon l'une quelconque des revendications précédentes, comprenant un circuit de calcul de gradient configuré pour calculer le gradient à partir de signaux générés par des pixels de la première matrice de détection (MD).

10. Capteur de mouvement selon la revendication précédente, dans lequel le circuit de calcul de gradient étant configuré pour déterminer le gradient à partir de séquences de données d'image générées par des pixels de la première matrice de détection (MD), les données d'image d'une même séquence de données d'image correspondant sensiblement à une même région de la scène observée à des instants différents, le circuit de calcul du gradient étant configuré pour filtrer les séquences de données d'image par des filtres à réponse impulsionnelle finie préalablement à la détermination du gradient de sorte à appliquer des poids respectifs aux données d'image des séquences de données d'image, les poids appliqués aux données d'image d'une même séquence décroissant avec l'ancienneté des données d'image de la séquence.

11. Capteur de mouvement selon l'une quelconque des revendications précédentes, dans lequel la première matrice de détection (MD) est réalisée en technologie CMOS.

12. Capteur de mouvement selon l'une quelconque des revendications précédentes, dans lequel au moins une ligne de la première matrice de détection (MD) est une matrice de détection de type TDI.

13. Capteur d'images comprenant un capteur de mouvement selon l'une quelconque des revendications précédentes et :

 - une matrice dite de détection d'images comprenant plusieurs pixels photosensibles agencés en lignes et colonnes, des images d'une même scène étant successivement acquises par des lignes de pixels différentes de la deuxième matrice de détection d'images lors du déplacement du porteur,
 - un circuit de génération d'images configuré pour délivrer de façon séquentielle des vecteurs de données d'image accumulés correspondant à des images lignes de différentes zones de la scène observées comprenant plusieurs composantes, chaque composante étant obtenue par accumulation de données d'image issues de signaux générés par des pixels de la matrice de détection d'images et correspondant sensiblement à une même région de la zone observé à différents instants au cours du déplacement du porteur.

14. Capteur d'images selon la revendication précédente, dans lequel le circuit de génération d'image est configuré de façon à déterminer au moins une image ligne est déterminé à partir d'au moins une de la dite au moins une grandeur représentative du décalage.

15. Capteur d'images selon l'une quelconque des revendications 13 ou 14, dans lequel la matrice de détection d'images est la première matrice de détection.

16. Capteur d'images selon l'une quelconque des revendications 13 à 14, dans lequel le circuit d'image est configuré pour utiliser au moins estimation d'une grandeur représentative du décalage pour former au moins une image ligne.

17. Instrument optique spatial ou aéroporté d'acquisition d'images, comprenant un capteur de mouvement selon l'une des revendications 1 à 12 ou un capteur d'images selon l'une quelconque des revendications 13 à 16.

**Patentansprüche**

1. Bewegungssensor (CM), welcher bestimmt ist, an Bord eines Trägers mitgeführt zu werden, welcher sich oberhalb einer Szene bewegt, und bei seiner Bewegung Schwingungen unterworfen zu werden, wobei der Bewegungssensor (CM) folgendes beinhaltet:

   - mindestens eine Detektionsmatrix (MD) genannte Matrix, welche mehrere lichtempfindliche Pixel (PX) beinhaltet, welche in L Zeilen und C Spalten so angeordnet sind, dass Bilder einer gleichen Szene nacheinander durch unterschiedliche Pixelzeilen der ersten Detektionsmatrix (MD) bei der Bewegung des Trägers erfasst werden, damit die lichtempfindlichen Pixel Bilddaten erzeugen,
   - einen Bearbeitungsschaltkreis (CT) von Signalen, Folgendes beinhaltend:

      - einen Filterschaltkreis (FILT), welcher konfiguriert ist, um mindestens eine Sequenz von N Bilddaten zu filtern, welche durch Pixel der ersten Detektionsmatrix erzeugt werden, und im Wesentlichen einem gleichen Bereich der an N unterschiedlichen Zeitpunkten beobachteten Szene entsprechen, wobei N vorbestimmt und größer als 2 ist, um so mindestens ein Pseudobilddatum zu erzeugen, wobei die Sequenz von N Bilddaten durch einen Filter mit endlicher Impulsantwort mit N Koeffizienten gefiltert wird,
      - ein Bewegungsschätzmodul (MOUV), welches konfiguriert ist, um mindestens eine Größe zu schätzen, welche eine Verschiebung zwischen einem aus einem lichtempfindlichen Pixel stammenden Bilddatum und einem Referenzbilddatum darstellt, anhand des erzeugten Pseudobilddatums und anhand eines Gradienten eines Bildes des gleichen Bereichs der Szene.

2. Bewegungssensor nach dem vorhergehenden Anspruch, bei welchem der Filterschaltkreis konfiguriert ist, um mehrere Sequenzen von N Bilddaten zu filtern, so dass mehrere Pseudobilddaten erzeugt werden, wobei das Bewegungsschätzmodul konfiguriert ist, um die mindestens eine Größe zu schätzen, welche die Verschiebung anhand einer einzigen Gruppe von Pseudobilddaten darstellt, gewählt aus den Pseudobilddaten, wobei die Pseudobilddaten der Gruppe anhand einer Bilddatensequenz bestimmt wird, welche unterschiedlichen an denselben unterschiedlichen Zeitpunkten N beobachteten Bereichen der Szene entsprechen.

3. Bewegungssensor nach einem der vorhergehenden Ansprüche, bei welchem mindestens ein Filter so definiert ist, dass er einen spektralen Tiefpass- oder Passbandfilter bildet, welcher es ermöglicht, ein vorbestimmtes Frequenzband der Verschiebung zu filtern.

4. Bewegungssensor nach dem vorhergehenden Anspruch, bei welchem die Summe der Koeffizienten $\alpha c,k$, wobei k= 1 bis N, der Filter gleich null ist.

5. Bewegungssensor nach einem der vorhergehenden Ansprüche, bei welchem der Filterschaltkreis (FILT) konfiguriert ist, um eine Vielzahl von Sequenzen von N durch Pixel der ersten Detektionsmatrix (MD) erzeugten Bilddaten zu filtern, welche unterschiedlichen an denselben unterschiedlichen Zeitpunkten N beobachteten Bereichen der Szene entsprechen, wobei die unterschiedlichen Sequenzen durch Filter mit endlicher Impulsantwort mit N identischen Koeffizienten gefiltert werden.

6. Bewegungssensor nach einem der Ansprüche 1 bis 4, bei welchem der Filterschaltkreis (FILT) konfiguriert ist, um eine Vielzahl von Sequenzen von N durch Pixel der ersten Detektionsmatrix (MD) erzeugten Bilddaten durch Filter mit endlicher Impulsantwort mit N unterschiedlichen Koeffizienten zu filtern, wobei das Bewegungsschätzmodul (MOUV) konfiguriert ist, um Größen zu schätzen, welche die Bewegung anhand der jeweiligen aus unterschiedlichen Filtern stammenden Pseudobilddaten darstellen.

7. Bewegungssensor nach dem vorherigen Anspruch, bei welchem die unterschiedlichen Filter auf Sequenzen unterschiedlicher Bilddaten einwirken, welche unterschiedlichen an denselben unterschiedlichen Zeitpunkten N beobachteten Bereichen der Szene entsprechen.

**8.** Bewegungssensor nach einem der vorhergehenden Ansprüche, beinhaltend einen Neueinsteuerungsschaltkreis (REC1), welche eine erste Verschiebung verwendet und konfiguriert ist, um mindestens ein Bilddatum neu einzusteuern, um so die erste Verschiebung zu korrigieren, so dass die Pseudobilddaten anhand einer Sequenz von N Bilddaten erzeugt werden, welche im Wesentlichen einem gleichen Bereich der zu den N unterschiedlichen Beobachtungszeitpunkten im Zuge der Bewegung des Trägers beobachteten Szene entsprechen.

**9.** Bewegungssensor nach einem der vorhergehenden Ansprüche, beinhaltend einen Schaltkreis zur Berechnung eines Gradienten, welcher konfiguriert ist, um den Gradienten anhand von Signalen zu berechnen, welche durch Pixel der ersten Detektionsmatrix (MD) erzeugt werden.

**10.** Bewegungssensor nach dem vorhergehenden Anspruch, bei welchem der Schaltkreis zur Berechnung des Gradienten konfiguriert ist, um den Gradienten anhand von Sequenzen von Bilddaten zu bestimmen, welche durch Pixel der ersten Detektionsmatrix (MD) erzeugt werden, wobei die Bilddaten einer gleichen Bilddatensequenz im Wesentlichen einem gleichen Bereich der zu unterschiedlichen Zeitpunkten beobachteten Szene entsprechen, wobei der Schaltkreis zur Berechnung des Gradienten konfiguriert ist, um die Bilddatensequenzen durch Filter mit endlicher Impulsantwort vor dem Bestimmen des Gradienten zu filtern, so dass entsprechende Gewichte auf die Bilddaten der Bilddatensequenzen angewandt werden, wobei die auf die Bilddaten einer gleichen Sequenz angewandten Gewichte mit dem Alter der Bilddaten der Sequenz abnehmen.

**11.** Bewegungssensor nach einem der vorhergehenden Ansprüche, bei welchem die erste Detektionsmatrix (MD) anhand der CMOS-Technologie hergestellt wird.

**12.** Bewegungssensor nach einem der vorhergehenden Ansprüche, bei welchem mindestens eine Zeile der ersten Detektionsmatrix (MD) eine Detektionsmatrix vom Typ TDI ist.

**13.** Bildsensor, beinhaltend einen Bewegungssensor nach einem der vorhergehenden Ansprüche und:

- eine Bilddetektionsmatrix genannte Matrix, welche mehrere lichtempfindliche Pixel beinhaltet, welche in Zeilen und Spalten angeordnet sind, wobei Bilder einer gleichen Szene nacheinander durch unterschiedliche Pixelzeilen der zweiten Bilddetektionsmatrix bei der Bewegung des Trägers erfasst werden,
- einen Bilderzeugungsschaltkreis, welcher konfiguriert ist, um angesammelte Bilddatenvektoren sequenziell abzugeben, welche den Zeilenbildern unterschiedlicher beobachteter Zonen der Szene entsprechen, beinhaltend mehrere Komponenten, wobei jede Komponente durch Anhäufung von Bilddaten erzielt wird, welche aus von Pixeln der Bilddetektionsmatrix stammenden Signalen erzeugt werden und im Wesentlichen einem gleichen Bereich der zu unterschiedlichen Zeitpunkten im Zuge der Bewegung des Trägers beobachteten Zone entsprechen.

**14.** Bildsensor nach dem vorhergehenden Anspruch, bei welchem der Bilderzeugungsschaltkreis konfiguriert ist, um mindestens ein Zeilenbild zu bestimmen, das anhand mindestens einer der mindestens einen Größe bestimmt wird, welche die Verschiebung darstellt.

**15.** Bildsensor nach einem der Ansprüche 13 oder 14, bei welchem die Bilddetektionsmatrix die erste Detektionsmatrix ist.

**16.** Bildsensor nach einem der Ansprüche 13 bis 14, bei welchem der Bildschaltkreis konfiguriert ist, um mindestens eine Schätzung einer die Verschiebung darstellenden Größe zu verwenden, um mindestens ein Zeilenbild zu bilden.

**17.** Optisches Instrument zur Bilderfassung für die Raumfahrt oder an Bord eines Luftfahrzeugs, beinhaltend einen Bewegungssensor nach einem der Ansprüche 1 bis 12 oder einen Bildsensor nach einem der Ansprüche 13 bis 16.

**Claims**

**1.** A motion sensor (CM) intended to be placed on board a carrier moving above a scene and destined to be subject to vibrations during its movement, the motion sensor (CM) comprising:

- at least one first matrix, called detection matrix (MD), comprising a plurality of photosensitive pixels (PX) arranged in L lines and C columns so that images of the same scene are successively acquired by different lines of pixels of the first detection matrix (MD) during the movement of the carrier so that the photosensitive pixels generate image data;
- a signal processing circuit (CT) comprising:

- a filtering circuit (FILT) configured to filter at least one sequence of N image data generated by pixels of said first detection matrix and substantially corresponding to the same region of the scene observed at N different instants, with N being predetermined and being greater than 2, so as to generate at least one pseudo-image data item, said sequence of N image data being filtered using a finite pulse response filter with N coefficients;
- a motion estimation module (MOUV) configured to estimate at least one magnitude representing a shift between an image data item originating from a photosensitive pixel and a reference image data item, on the basis of the generated pseudo-image data item and on the basis of a gradient of an image of the same region of the scene.

2. The motion sensor as claimed in the preceding claim, wherein the filtering circuit is configured to filter a plurality of sequences of N image data so as to generate a plurality of pseudo-image data items, the motion estimation module is configured to estimate said at least one magnitude representing the shift on the basis of a single set of pseudo-image data items taken from said pseudo-image data items, the pseudo-image data items of said set being determined on the basis of a sequence of image data corresponding to different regions of the scene observed at the same N different instants.

3. The motion sensor as claimed in any one of the preceding claims, wherein at least one filter is defined so as to form a low-pass or band-pass spectral filter allowing a predetermined frequency band of the shift to be filtered.

4. The motion sensor as claimed in the preceding claim, wherein the sum of the coefficients $\alpha c,k$, with k = 1 to N, of the filters is zero.

5. The motion sensor as claimed in any one of the preceding claims, wherein the filtering circuit (FILT) is configured to filter a plurality of sequences of N image data generated by pixels of said first detection matrix (MD) and corresponding to different regions of the scene observed at the N different instants, the different sequences being filtered using finite pulse response filters with N identical coefficients.

6. The motion sensor as claimed in any one of claims 1 to 4, wherein the filtering circuit (FILT) is configured to filter a plurality of sequences of N image data generated by pixels of said first detection matrix (MD) using finite pulse response filters with N distinct coefficients, the motion estimation module (MOUV) being configured to estimate magnitudes representing the motion on the basis of respective pseudo-image data originating from separate filters.

7. The motion sensor as claimed in the preceding claim, wherein the separate filters act on sequences of separate image data corresponding to different regions of the scene observed at the N different instants.

8. The motion sensor as claimed in any one of the preceding claims, comprising a recalibration circuit (REC1) that uses a first shift and is configured to recalibrate at least one image data item so as to correct the first shift, so that the pseudo-image data is generated on the basis of a sequence of N image data substantially corresponding to the same region of the scene observed at the N observation instants during the movement of the carrier.

9. The motion sensor as claimed in any one of the preceding claims, comprising a gradient computation circuit configured to compute the gradient on the basis of signals generated by pixels of the first detection matrix (MD).

10. The motion sensor as claimed in the preceding claim, wherein the gradient computation circuit is configured to determine the gradient on the basis of sequences of image data generated by pixels of the first detection matrix (MD), the image data of the same sequence of image data substantially corresponds to the same region of the scene observed at different instants, the gradient computation circuit is configured to filter the sequences of image data using finite pulse response filters prior to determining the gradient, so as to apply respective weights to the image data of the sequences of image data, the weights applied to the image data of the same sequence decreasing with the age of the image data of the sequence.

11. The motion sensor as claimed in any one of the preceding claims, wherein the first detection matrix (MD) is produced using CMOS technology.

**12.** The motion sensor as claimed in any one of the preceding claims, wherein at least one line of the first detection matrix (MD) is a TDI type detection matrix.

**13.** An image sensor comprising a motion sensor as claimed in any one of the preceding claims and:

- a matrix, called image detection matrix, comprising a plurality of photosensitive pixels arranged in lines and columns, with images of the same scene being successively acquired by lines of different pixels of the second image detection matrix during the movement of the carrier;
- an image generation circuit configured to sequentially deliver vectors of accumulated image data corresponding to line images of different zones of the observed scene comprising a plurality of components, each component being obtained by accumulating image data originating from signals generated by pixels of the image detection matrix and substantially corresponding to the same region of the zone observed at different instants during the movement of the carrier.

**14.** The image sensor as claimed in the preceding claim, wherein the image generation circuit is configured so as to determine at least one line image that is determined on the basis of at least one of said at least one magnitude representing the shift.

**15.** The image sensor as claimed in any one of claims 13 or 14, wherein the image detection matrix is the first detection matrix.

**16.** The image sensor as claimed in any one of claims 13 to 14, wherein the image circuit is configured to use at least an estimation of a magnitude representing the shift in order to form at least one line image.

**17.** A space or airborne optical instrument for acquiring images, comprising a motion sensor as claimed in any one of claims 1 to 12 or an image sensor as claimed in any one of claims 13 to 16.

FIG.1

FIG.2

FIG.3a

FIG.3b

FIG.4

FIG.5

**EP 3 402 178 B1**

## RÉFÉRENCES CITÉES DANS LA DESCRIPTION

**Documents brevets cités dans la description**

- FR 2967754

**Littérature non-brevet citée dans la description**

- **R. PERRIER.** Satellite image registration for attitude estimation with a constrained polyniomial model. *Proceedings of International Conférence on Image Processing,* Septembre 2010